# EUROPÄISCHE PATENTSCHRIFT

(11) **EP 2 962 072 B1**
(45) Veröffentlichungstag und Bekanntmachung des Hinweises auf die Patenterteilung: **22.03.2017**
(21) Anmeldenummer: 14705704.6
(22) Anmeldetag: 25.01.2014
(51) Int. Cl.: G01F 1/60, G01F 15/06

(54) **BATTERIELOSER SIGNALGEBER MIT WIEGAND-SENSOR FÜR GAS- ODER WASSERZÄHLER**
BATTERY-LESS SIGNAL TRANSMITTER WITH WIEGAND SENSOR FOR GAS OR WATER METERS
CAPTEUR DE SIGNAUX SANS BATTERIE POURVU D'UN CAPTEUR WIEGAND POUR COMPTEURS DE GAZ OU D'EAU

(30) Priorität: 26.02.2013 DE 102013003190
(43) Veröffentlichungstag der Anmeldung: 06.01.2016
(73) Patentinhaber: Hengstler GmbH, 78554 Aldingen (DE)
(72) Erfinder: EFIMOV, George, 78628 Rottweil (DE); MIXNER, Michael, 78504 Villingen-Schwenningen (DE)
(74) Vertreter: Riebling, Peter
(86) Internationale Anmeldenummer: PCT/EP2014/000202
(87) Internationale Veröffentlichungsnummer: WO 2014/131486

(56) Entgegenhaltungen:
- WO-A1-2012/092940
- DE-A1- 19 714 351
- DE-B3- 10 259 223
- US-A1- 2006 076 948
- US-B2- 6 612 188

## Beschreibung

Die Erfindung betrifft einen batterielosen Signalgeber mit Wiegand-Sensor nach dem Oberbegriff des Patenanspruches 1.

Bei bisher bekannten Gas- oder Wasserzählern wird der Zählerstand elektronisch ausgelesen und digital verarbeitet. Nach dem Stand der Technik ist es bekannt, zusätzlich so genannte Niedrigfrequenzsignal (LF)- oder Hochfrequenzsignal (HF)- Signalgeber zu verwenden.

Die LF-Anwendungen werden in Rotationsgaszählern mit niedriger Umdrehungszahl eingesetzt. Am Rotationsgaszähler können zusätzlich so genannte Flowcomputer (z.B. Mengenumwerter u.ä.) angeschlossen werden, welche, mit zusätzlichen Messinformationen wie Gastemperatur und Gasdruck, den vom Gaszähler im Betriebszustand gemessenen Gasvolumenwert in einen Gasvolumenwert im sog. "Normzustand" umrechnen (Temperatur- und Druckkorrektur des Gasvolumens).

Andererseits sind so genannte HF-Anwendungen bekannt. Hier handelt es sich um industriell eingesetzte Turbinenradzähjer, die mit hoher Umdrehung rotieren. Auch hier werden zusätzliche Flowcomputer (z.B. Mengenumwerter u.ä.) für einzelne Aufgaben angeschlossen, welche das HF-Signal als Eingangssignal verwenden.

Bisher war es jedoch nicht bekannt, zwischen diesen beiden Anwendungsarten umzuschalten oder von einer Anwendungsart auf die andere überzugehen.

Mit dem Gegenstand der US 6 612 188 B2 ist ein batterieloser Zähler mit Verwendung eines Wiegand-Sensors bekannt geworden, bei der der Wiegand-Sensor allein zur Stromversorgung der Auslöseschaltung dienen soll.

Die genannte Druckschrift offenbart lediglich eine Zählschaltung, ohne dass eine Auswertung der Zählimpulse dort beschrieben wäre. Damit besteht der Nachteil, dass die Stromversorgung durch den Wiegand-Sensor nur die Zählschaltung mit Strom versorgt, nicht aber weiter daran angeschlossene Auswerteschaltungen.

Im Übrigen besteht der weitere Nachteil, dass die von dem dort verwendeten Wiegand-Sensor erzeugten Impulse unscharf und schwierig zu verarbeiten sind. Die Betriebssicherheit einer derartigen Schaltung ist deshalb eingeschränkt.

Mit dem Gegenstand der DE 102 59 223 B3 oder der EP 0 658 745 B1 ist ein Positionsdetektor bekannt geworden, der im einfachsten Fall mit zwei Impulsspulen einen dort als Impulsdraht bezeichneten Wiegand-Sensor betätigt, wobei aus der Auslöserichtung der Ummagnetisierung und der Ummagnetisierungsrichtung des Impulsdrahtes zusammen mit der letzten festgestellten und abgespeicherten Position und Polarität alle für eine Zählung notwendigen Informationen gleichzeitig vorhanden sind.

Die Energieversorgung für die Auswerteelektronik erfolgt aus den Signalen der Induktionsspulen SP, SP1 und SP2. Wenn nur eine Induktionsspule SP verwendet wird, dann erfolgt die Energieversorgung einer Hall-Sonde durch diese Spule.

Nachteil bei dieser Anordnung ist, dass eine aufwendige Schaltung vorgesehen wird, die nicht in der Lage ist, zusätzliche Impulsfrequenzen zur Verfügung zu stellen.

Durch eine solche Zurverfügungstellung zusätzlicher Impulsfrequenzen aus dem Signal des Wiegand-Sensors könnten zusätzliche Impulswandlerschaltungen eingespart werden, was eine einfachere Auswertung am Ausgang des batterielosen Signalgebers ermöglicht. Somit wäre ein universeller Einsatz gegeben.

Bei den genannten Druckschriften besteht der weitere Nachteil, dass die den Wiegand-Sensor nachgeschaltete Auswerteschaltung in nachteiliger Weise die Impulsformung der Zählimpulse beeinträchtigen kann. Außerdem wird bei diesen Druckschriften der von dem Wiegand-Sensor erzeugte Impuls nicht nach außen geleitet, sondern intern in einer aufwendigen Zählschaltung verwendet, an deren Ausgang ein gezählter und ausgewerteter Wert erscheint. Die aufbereiteten Zählimpulse sind bei derartigen Schaltungen nicht nach außen ableitbar.

Der Erfindung liegt deshalb die Aufgabe zugrunde, einen batterielosen Zähler mit Wiegand-Sensor der eingangs genannten Art so weiterzubilden, dass er in der Lage ist, die intern aufbereiteten Impulse nach außen dem Kunden zur Verfügung zu stellen, und dass eine Rückwirkung der nach außen abgeleiteten Impulse auf die gezählten Impulse der Zählschaltung nicht vorkommt. Diese zusätzlich nach außen abgeleiteten Impulse können in Bezug zu den erzeugten Impulsen des Wiegand-Sensors nach Häufigkeit und Impulsform einstellbar ausgeführt sein.

Zur Lösung der gestellten Aufgabe ist die Erfindung durch die technische Lehre des Anspruches 1 gekennzeichnet.

Wesentliches Merkmal der Erfindung ist, dass der batterielose Signalgeber mit Wiegand-Sensor im Wesentlichen die vom Wiegand-Sensor erzeugten Impulse einem Trennglied zuführt, welches beispielsweise als MOSFET ausgebildet ist und dass am Ausgang, dieses Trenngliedes eine Impulsschaltung für die Impulsaufbereitung angeordnet ist, welche im einfachen Fall die gezählten Impulse wahlweise in Impulse mit hoher Impulslänge oder mit niedriger Impulslänge umwandelt, und dass ferner beide Impulsarten am Ausgang des batterielosen Zählers zur Weiterverarbeitung zur Verfügung gestellt werden. Die Verwendung eines Trenngliedes in einer hoch isolierenden Ausführung, wie z.B. in der Ausführung als MOSFET hat den Vorteil, dass praktisch keine Leckströme erzeugt werden, welche den Wirkungsgrad des Wiegand-Sensors beeinträchtigen könnten.

Es handelt sich also um eine einstellbare Impulslänge der vom Wiegand-Sensor erzeugten Zählimpulse, wobei die eine Art der Impulse, die nur eine geringe Impulsbreite haben, der Einfachheit halber als HF-Impulse bezeichnet werden, während die Impulse, die eine relative lange Impulsdauer haben, als LF-Impulse bezeichnet werden.

Die Nutzung und das Vorhandensein der Zählschaltung ist hierbei optional - die Kombination mit einer echten Zählung damit nicht zwingend.

Die HF-Impulse können für Zählungen hochdrehender Turbinen angewendet werden, ohne dass die Gefahr besteht, dass bei einer derartigen Impulserzeugung die Impulse sich gegenseitig überlagern.

Bei niedrig drehenden Anwendungen werden bevorzugt die LF-Impulse verwendet.

Der vom Wiegand-Sensor erzeugte Energieimpuls wird über eine zur ersten Signalverarbeitung (welche für den bereits bekannten Zählvorgang benutzt wird) parallele Schaltung geleitet, um diese HF-/LF-Signale zu erzeugen. Dazu steuert der Wiegand den vorher genannten MOSFET an. Ausgehend von diesem ersten MOSFET wird die Schaltung zur Erzeugung des HF-/LF-Signals betrieben. Somit wird vom Wiegand-System nahezu keine elektrische Energie abgezogen, welche die Hauptfunktion (Zählvorgang) beeinträchtigen könnte. Mit einem Jumper oder einem Wählschalter kann zwischen der Signalaufbereitung von HF- oder LF-Signalen gewechselt werden, und es kann dazu die gleiche Schaltung benutzt werden, was mit einem sehr niedrigen Schaltungsaufwand verbunden ist.

Durch die Verwendung eines MOSFETs als Trennglied wird der Vorteil erreicht, dass mit geringstem Stromverbrauch ein relativ schwaches Signal des Wiegand-Sensors rückwirkungsfrei verwendet werden kann.

In einer Weiterbildung der Erfindung ist es auch vorgesehen, dass die Impulse der HF-/LF-Signale einstellbar ausgebildet sind.

Demgemäß bestehen die Vorteile der Erfindung darin, dass die Amplitude, Häufigkeit und die Zeitdauer der HF-/LF-Impuls einstellbar sind und dass durch das erfindungsgemäße Trennglied keine Beeinflussung der eigentlichen stromlosen Zählung stattfindet. Es werden gut zu detektierende rechteckförmige Impulse erzeugt, dies ganz im Gegensatz zu vielen bekannten Sensoren und Signalgebern, die lediglich in der Lage sind, sinusförmige Signale / Impulse zu erzeugen (z.B. kapazitive, induktive o.ä. Sensoren).

Derartige Geräte zur Erzeugung von Impulsen, wie sie im Gasbereich verwendet werden und die mit einem der oben genannten Sensorprinzipien / Signalgebern arbeiten, können nunmehr entfallen, weil erfindungsgemäß diese Funktion, mit zudem vorteilhaftem rechteckförmigen Ausgangssignal, vom einem batterielosen Zähler übernommen werden kann.

Solche zum Stand der Technik gehörenden Sensoren / Signalgeber benötigen eine eigene Energieversorgung. Eine solche Energieversorgung muss extern zugeführt werden oder durch eine Batterie aufgebracht werden.

Gemäß der Erfindung muss für die HF- und LF-Signale in Verbindung mit dem batterielosen Zähler zwar auch von außen Energie zugeführt werden, aber diese Energie wird von der Kundenseite zugeführt, und zwar von den vom Kunden beizustellenden Kundenauswerteschaltungen (z.B. Flowcomputer, Mengenumwerte u.a.), welche die am Ausgang des batterielosen Zählers anliegenden rechteckförmigen Signale weiter verarbeiten. Auch wird nur dann Energie zugefügt, wenn die Impulse von einer der Kundenauswerteschaltungen gebraucht werden und die Kundenauswerteschaltungen damit zusätzlich an den batterielosen Zähler angeschlossen wird.

Hier reicht es aus, im Bereich der Kundenauswerteschaltung eine einfache Stromversorgung einzubauen, die zum Beispiel als AC/DC Wandler oder als Batterie ausgebildet ist. Wichtig hierbei ist, dass diese externe Stromversorgung nur einzig und allein auf die Impulswahlschaltung im batterielosen Zähler wirkt, aber die Zählschaltung, welche die Signale des Wiegand-Sensors aufbereitet, nicht beeinflusst und auch nicht notwendig ist, dass diese Zählschaltung mit Strom versorgt wird. Weil nur ein Teil des batterielosen Signalgebers, nämlich nur die Impulswahlschaltung allein von der externen Energie versorgt wird, ergibt sich hieraus eine besonders lange Batterielebensdauer, die im Bereich von zwischen 10 bis 20 Jahren liegen kann.

Wichtig ist also, dass ein zusätzlicher Sensor / Signalgeber zur Erfassung der Signale eines rotierenden Magnetfeldes entfallen kann, der in nachteiliger Weise Sinussignale erzeugt und dass stattdessen gemäß der Erfindung mit einem Wiegand-Sensor und einem batterielosen Signalgeber, der stromlos arbeitet, eine Aufbereitung in Rechteckform passiert, das beim Stand der Technik nicht der Fall war.

Nach einer weiteren Weiterbildung der vorliegenden Erfindung ist eine variable Zuordnung von HF/LF-Pulsen zu den Wiegand-Pulsen vorgesehen.

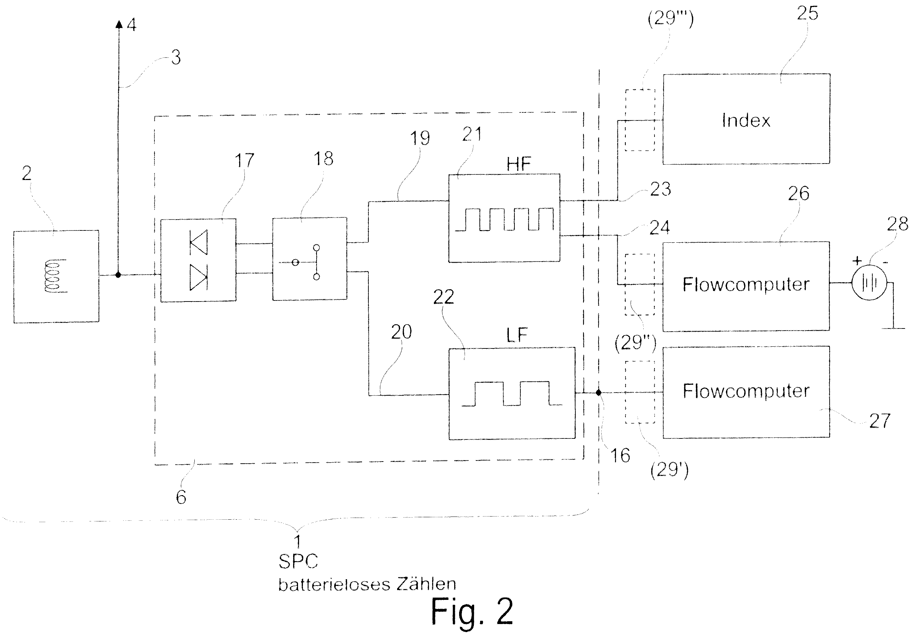

Die HF/LF-Pulse dienen vorwiegend als Eingangssignal für die zusätzlich oder alternativ anschließbaren Flowcomputer (siehe Figur 2).

Damit können z. B. verschiedene Getriebeübersetzungen im Gaszähler entfallen und die Getriebeübersetzung in den SPC einprogrammiert werden. Getriebeübersetzung 0,5 entspricht z. B. Pulsübersetzung 0,5. Die nachgeschalteten Flowcomputer (siehe Figur 2) können dann unverändert bestehen bleiben - alte Gaszähler können ohne Weiteres mit neuen (ohne mechanischem Getriebe und mit SPC) ausgetauscht werden, ohne die nachgeschalteten Geräte austauschen zu müssen.

Die Erfindung offenbart mehrere Pulsübersetzungen, wobei das Verhältnis der Pulsübersetzungen vollkommen frei gewählt werden kann.

Für diese Pulsübersetzung wird vorzugsweise eine Impulswahlschaltung mit einem Microcontroller verwendet, welcher vorzugsweise auch über die HF/LF-Leitung versorgt wird (mit zwischengespeicherten Energiespeicher). Durch den Wiegandpuls kann die Stromversorgung nicht erfolgen. Mit dem Microcontroller können frei wählbare Übersetzungen gewählt werden zwischen 0...(1 )...X. Dabei bedeutet eine Übersetzung von 0,5, dass 10 Wiegandpulse 5 HF/LF-Pulse entspricht (10 Wiegandpulse x 0,5 = 5 HF/LF-Pulse).

Statt Microcontroller können auch andere elektronische Halbleiterbausteine verwendet werden (z. B. Dekadenbausteine) - dann wäre die Übersetzung aber nicht stufenlos über Software wählbar.

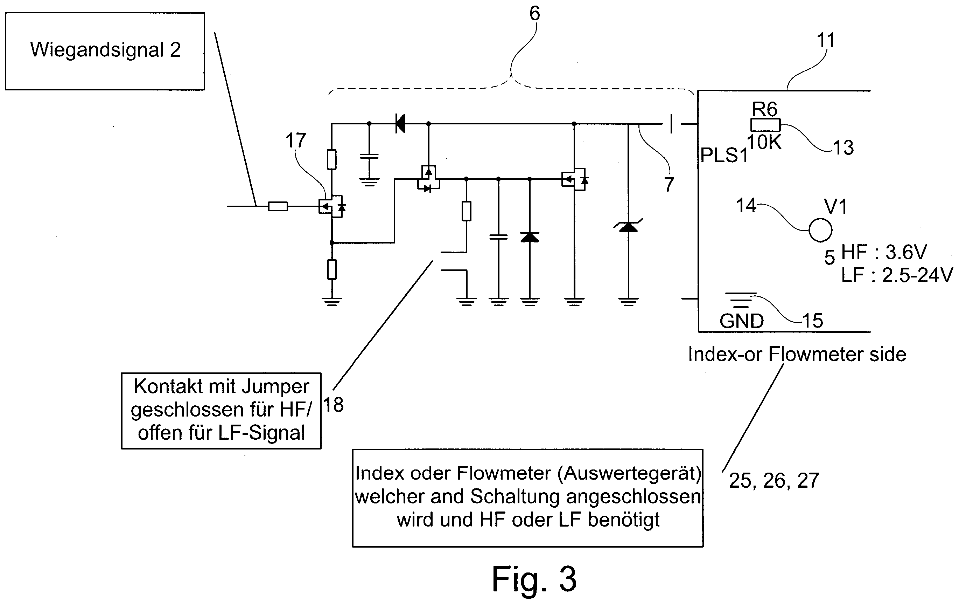

Wenn ein Microcontroller verwendet wird, kann die Einstellung der Pulslänge (HF-LF-Unterschied) ebenfalls über Software realisiert werden. Die diskrete Schaltung in Figur 3 wäre dann hinfällig.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

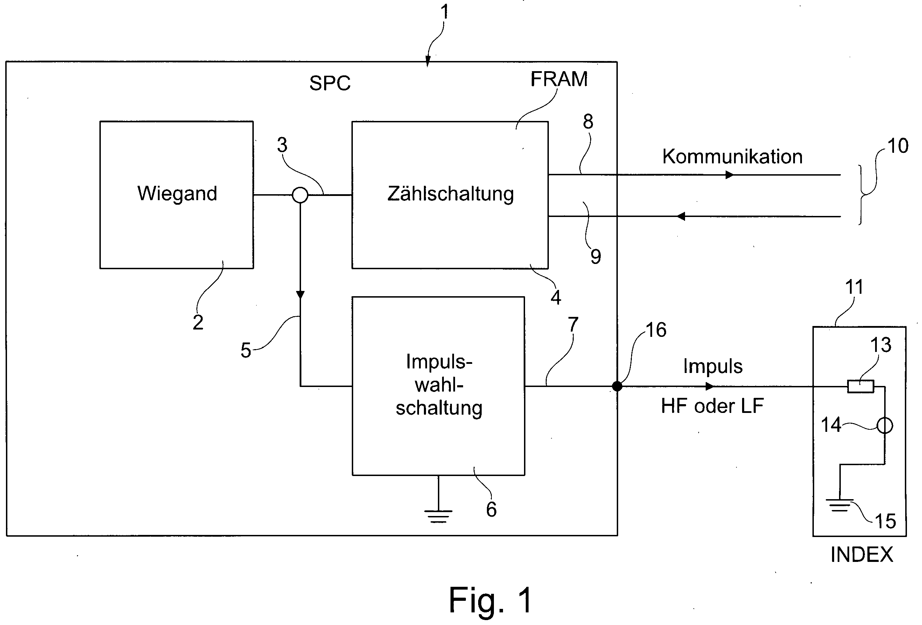

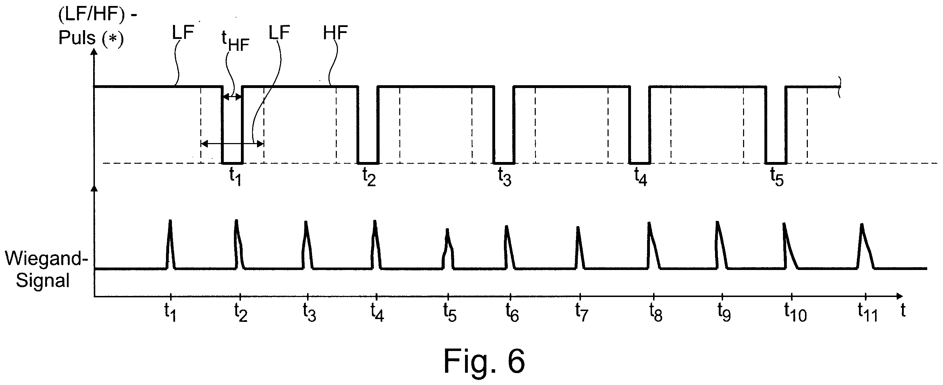

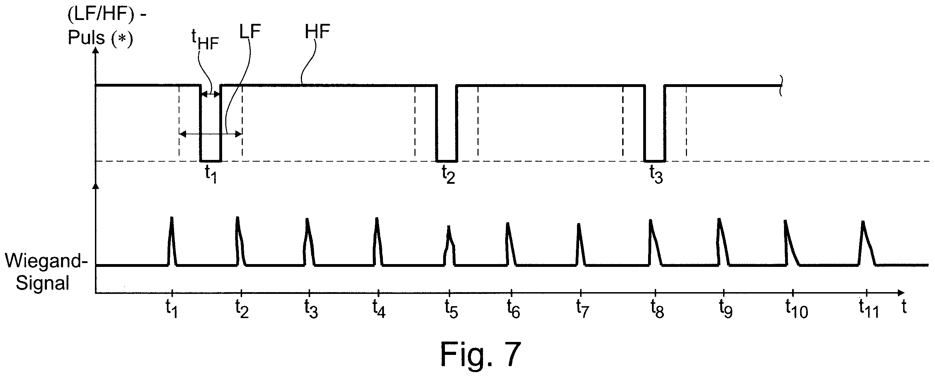

Es zeigen:
Figur 1:
   Blockschaltbild eines batterielosen Zählers
Figur 2:
   ein gegenüber Figur 1 verfeinertes Blockschaltbild mit Darstellung weiterer externer anzuschließender Kundenauswerteschaltungen
Figur 3:
   ein verfeinertes Schaltbild im Vergleich zu Figuren 1 und 2
Figur 4:
   das Signaldiagramm der von der Schaltung erzeugten LF-Impulse
Figur 5:
   das Signaldiagramm der von der Schaltung erzeugten HF-Impulse
Figur 6:
   ein erstes Ausführungsbeispiel für eine variable Zuordnung von HF/LF-Pulsen zu den Wiegand-Pulsen, wobei eine einprogrammierte Pulsübersetzung von 0,5 Anwendung findet
Figur 7:
   ein zweites Ausführungsbeispiel im Vergleich zur Figur 6, wobei eine einprogrammierte Pulsübersetzung von 0,3 Anwendung findet
Figur 8:
   ein drittes Ausführungsbeispiel im Vergleich zur Figur 6 und 7, wobei eine einprogrammierte Pulsübersetzung von 2,0 Anwendung findet
   Der batterielose Zähler 1 in Figuren 1 und 2 arbeitet stromlos. Dies bedeutet, dass er auf eine externe Stromversorgung wie eine Versorgung mit einer Batterie oder eine externe Stromzufuhr nicht angewiesen ist.

Die gesamte Anordnung des batterielosen Zählers ist in einem rohrförmigen Gehäuse mit einem Außendurchmesser von zum Beispiel 30 mm und einer Länge von 40 mm untergebracht, woraus sich ergibt, dass ein solches rohrförmiges Gehäuse in einem Gas- oder Wasserzähler eingeschraubt werden kann, in dessen Innenraum ein Turbinenrad rotiert, welches mit einem oder mehreren Permanentmagneten besetzt ist. Dieses rotierende Magnetfeld wird von dem Wiegand-Sensor 2 erfasst und in an sich bekannter Weise in Impulse umgesetzt, die über die Leitung 3 einer Zählschaltung 4 zugeleitet werden. Die Zählschaltung 4 zählt die eingehenden Impulse pro Zeiteinheit je nach Drehrichtung hinauf oder herunter und speichert diesen Zählwert in einem FRAM ab.

Am Ausgang der Zählschaltung sind hierbei die Leitungen 8, 9 angeschlossen, die am Gehäuse des batterielosen Zählers abgegriffen werden können und einer oder mehreren Anzeige- und Auswerteschaltungen 10 über eine Kommunikationsleitung zugeführt werden können. Die Leitungen 8, 9 sind beispielhaft als serieller BUS ausgebildet. Von der Leitung 3 zweigt eine Leitung 5 ab, die den Eingang einer Impulswahlschaltung 6 bildet. Mit dieser Impulswahlschaltung ist es möglich, die vom Wiegand-Sensor erzeugten Signale in andere Signalformen zu übersetzen. Hier wird z. B. ausgewählt, ob am Ausgang der Leitung 7 LF-Signale oder HF-Signale erscheinen sollen.

Der Kunde, der diesen batterielosen Zähler in einen Wasser- oder Gaszähler einsetzt, kann vorher an der Impulswahlschaltung auswählen, welche Art von Impulsen er auf der Leitung 7 verwenden möchte.

Diese Signale stehen am Anschlusspunkt 16 des batterielosen Zählers 1 zur Verfügung und werden einer Kundenschaltung 11 zugeleitet, in der mindestens ein Widerstand 13, eine Spannungsquelle 14 und eine Erdleitung 15 angeordnet sind.

Wichtig hierbei ist, dass allein die Spannungsquelle 14 über die Leitung 7 und den Anschlusspunkt 16 die Impulswahlschaltung 6 mit Strom versorgt, um die dort enthaltenen Elemente betriebsfähig zu halten.

Die Impulswahlschaltung 6 wird von einer externen Stromversorgung versorgt mit welcher auch die Amplitude der Ausgangspulse 30, 32 eingestellt werden können.

In der Impulswahlschaltung 6 sind in der einfachsten Ausführung lediglich diskrete elektronische Elemente enthalten, die in Figur 3 aufgezeichnet sind, nämlich beispielsweise Gleichrichterdioden, Kondensatoren und MOSFETs sowie Widerstände, sodass es sich um Standardbausteine handelt.

Die Figur 3 zeigt ein verfeinertes Ausführungsbeispiel im Vergleich zu Figur 1, dass die erzeugten und aufbereiteten Signale bzw. Impulse 31 des Wiegand-Sensors 2 über einen Widerstand einem Trennglied 17 zugeführt werden, welches als hoch isolierendes MOSFET ausgebildet ist. Damit wird jede Rückwirkung der Signale in der Impulswahlschaltung 6 über die Leitung 5 auf den Wiegand-Sensor 2 vermieden.

Im Übrigen sind der Impulswahlschaltung noch weitere vorher erwähnte Bauteile enthalten, wobei wichtig ist, dass z.B. mit einem Jumper 18 eine einfache Impulsdauereinstellung vorgenommen werden kann. Über die Leitung 7 stehen dann die HF- oder wahlweise die LF-Signale für die weitere Auswertung zur Verfügung.

Wichtig ist, wie die Figur 3 zeigt, dass die Kundenauswerteschaltung oder Kundenschaltung 11 beliebig ausgebildet sein kann, sie kann zum Beispiel als Flow-Computer 26, 27 oder auch als sonstige Kundenauswerteschaltung ausgebildet sein. Hierauf wird später noch näher eingegangen.

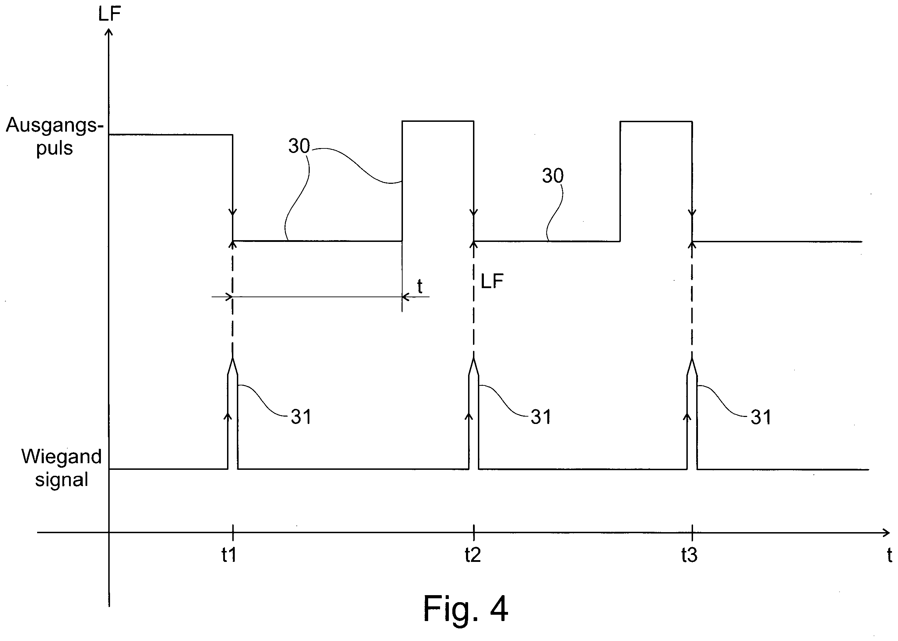

Die Figur 4 zeigt als Beispiel für die Erzeugung der LF-Signale, dass eine relativ lange Pulsdauer aus den Wiegand-Pulsen 31 zu den Zeitpunkten t1, t2 und t3 erzeugt wird. Jeweils die aufsteigende Flanke des Wiegand-Pulses 31 leitet die Signalformung des LF-Signals ein, der damit als Ausgangspuls LF geformt wird und eine bestimmte Dauer hat, wobei die Dauer t_{LF} nicht den Zeitabstand zwischen den Wiegand-Pulsen 31 überschreiten darf.

Die Wiegand-Pulse 31 sind gleichgerichtet.

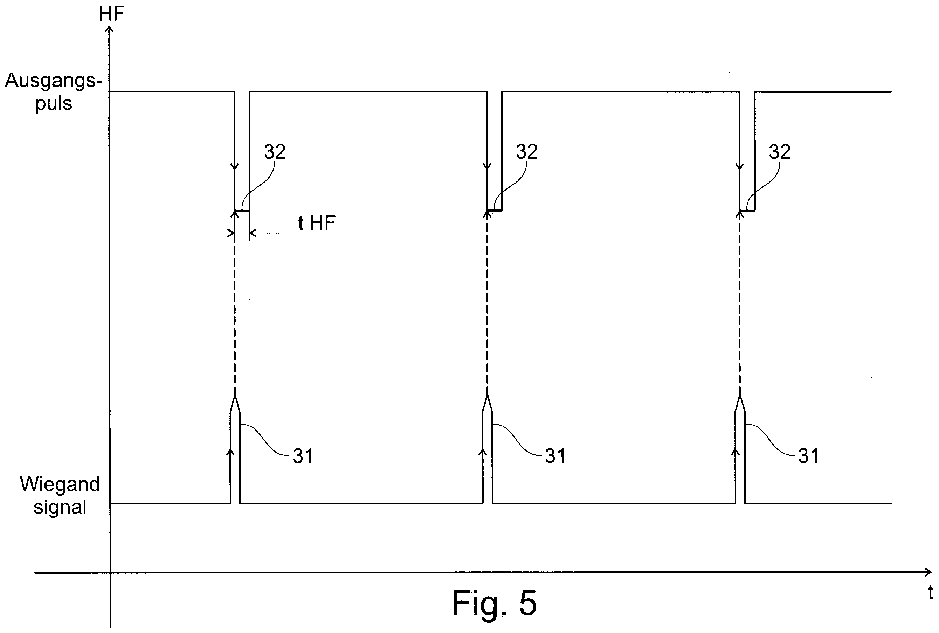

Die gleiche Darstellung zeigt die Figur 5 in analoger Weise, wo erkennbar ist, dass aus den gleichgerichteten Wiegand-Pulsen 31 auch sehr schmale, in der Impulsdauer kurze Ausgangspulse HF mit einer Dauer t_{HF} geformt werden können. Solche Ausgangspulse 32 werden vor allem in schnell drehenden Applikationen verwendet.

Die Figur 2 zeigt in gestrichelten Linien auch den Vorteil der Erfindung, wo nämlich dargestellt ist, dass die vorher notwendigen Sensoren / Signalgeber 29, die aus einem Sensor und einer Auswerteschaltung bestehen, entfallen können. Anstatt des einzigen batterielosen Zählers 1 hätten beim Stand der Technik die Signalgeber 29', 29" und 29"' angeordnet werden können.

Es liegt auf der Hand, dass bei Vorhandensein derartiger Sensoren / Signalgeber 29', 29" und 29'" zum Teil nur sehr schlecht zu verarbeitende sinusförmige Impulse und Signale erzeugt werden können, die dann zu einer komplizierteren Verarbeitung , meist zur bevorzugten Rechteckimpulsform, in den nachgeschalteten Kundenauswerteschaltungen 25, 26, 27 führen.

Um solche Nachteile zu vermeiden, ist es dann bekannt, in den Kundenauswerteschaltungen 25, 26, 27 umfangreiche Signalaufbereitungen vorzusehen, was bei der vorliegenden Erfindung entfallen kann. Bei der vorliegenden Erfindung wird die Signalaufbereitung bereits schon in den batterielosen Zähler 1 verlegt.

Im Blockschaltbild nach Figur 2 ist dargestellt, dass von der über Jumper eingestellten Impulsdauereinstellung 18 über die Leitung 19 ein Pulslängenblock 21 der HF-Impulse erzeugt wird und über die Leitungen 23, 24 am Ausgang zur Verfügung steht, während über die Leitung 20 ein Pulslängenblock 22 für die LF-Impulse zur Verfügung steht, welche am Anschlusspunkt 16 zur Verfügung stehen.

Die Figur 6 zeigt eine einprogrammierte Pulsübersetzung von 0,5. Dies heißt, dass 10 Wiegand-Pulsen 5 HF/LF-Pulsen entsprechen. Es handelt sich demnach um eine einprogrammierte Pulsübersetzung von 10 x 0,5 = 5.

In den vorherigen Ausführungsbeispielen war der Ausdruck LF/HF die Bezeichnung der Pulslänge (Pulslängenunterschied). Bei einer variablen, programmierbaren Anzahl an HF/LF-Pulsen; z. B. über einen Microcontroller in der Impulswahlschaltung kann pro Anzahl Wiegand-Pulse auch die Pulslänge vom Microcontroller vorgegeben bzw. einprogrammiert werden. Eine diskrete Schaltung, wie in Figur 3 (Schaltung ohne Microcontroller) ist dann hinfällig.

In der oberen Darstellung in Figur 6 sind jeweils in durchgezogenen Linien die HF-Pulse dargestellt, während in gestrichelten Linien die LF-Pulse dargestellt sind.

Der Pulsabstand der HF-Pulse beträgt t_{HF}, während der Pulsabstand der LF-Pulse den Wert t_{LF} beträgt.

In der unteren Darstellung sind die jeweiligen Wiegand-Signale zu den Zeiten t₁ bis t₁₁ eingezeichnet.

Für die Figur 7 gelten die gleichen Erläuterungen wie in Figur 6, und es sind die gleichen Bezeichnungen eingetragen.

In Figur 7 ist eine einprogrammierte Pulsübersetzung von 0,3 eingezeichnet. 10 Wiegand-Pulse entsprechen 3 HF/LF-Pulsen.

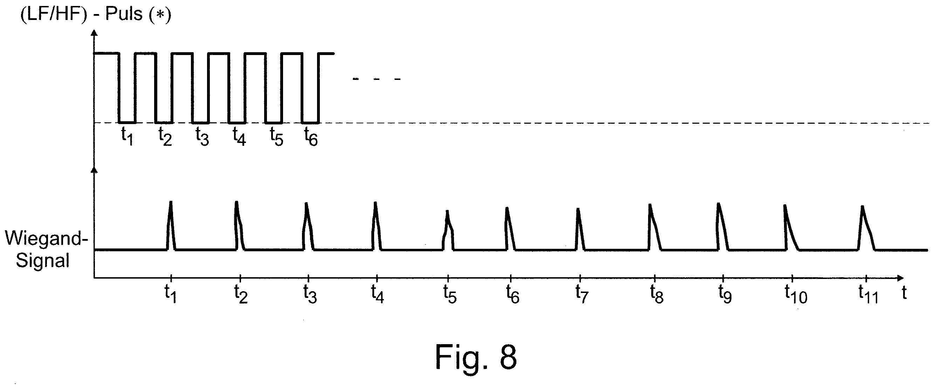

Die gleichen Erläuterungen, wie vorstehend gelten auch für die Figur 8. Dort ist eine einprogrammierte Pulsübersetzung von 2,0 zeichnerisch dargestellt. 10 Wiegand-Pulse entsprechen etwa 20 HF/LF-Pulsen.

### Zeichnungslegende

- 1: batterieloser Zähler
- 2: Wiegand-Sensor
- 3: Leitung
- 4: Zählschaltung
- 5: Leitung
- 6: Impulswahlschaltung
- 7: Leitung
- 8: Leitung
- 9: Leitung
- 10: Anzeige- und Auswerteschaltungen
- 11: Kundenschaltung
- 12 13: Widerstand
- 14: Spannungsquelle
- 15: Erdleitung
- 16: Anschlusspunkt
- 17: Trennglied
- 18: Impulsdauereinstellung
- 19: Leitung
- 20: Leitung
- 21: Pulslängenblock
- 22: Pulslängenblock
- 23: Leitung
- 24: Leitung
- 25: Kundenauswerteschaltung
- 26: Kundenauswerteschaltung
- 27: Kundenauswerteschaltung
- 28 29: Signalgeber 29', 29", 29"'
- 30 31: Wiegand-Puls
- 32: Ausgangspuls

## Patentansprüche

1. Batterieloser Zähler (1) für Gas- oder Wasserzähler mit mindestens einem Wiegand-Sensor (2) als energieerzeugendes Element und einer daran angeschlossenen Auswertschaltung (10) zur Verarbeitung eines Impulses (31). **dadurch gekennzeichnet, dass** der batterielose Zähler die vom Wiegand-Sensor (2) erzeugten und aufbereiteten Impulse (31) einem hoch isolierten Trennglied (17) zuführt, und dass am Ausgang dieses Trenngliedes (17) eine Impulswahlschaltung (6) mit einer Impulsdauereinstellung (18) angeordnet ist, welche die gleichzeitig über die Zählschaltung (4) gezählten Impulse (31) mit der Impulswahlschaltung (6) aufbereitet und in andere Impulsformen/Impulsfrequenzen in Form von HF/LF-Impulsen (30, 32) umwandelt und nach außen leitet, wobei eine variable Zuordnung der HF/LF Impulse (30, 32) zu Wiegand-Impulsen (31) mit wählbarer Pulsübersetzung vorgesehen ist.

2. Batterieloser Zähler (1) nach Anspruch 1, **dadurch gekennzeichnet, dass** das Trennglied (17) als MOSFET ausgebildet ist.

3. Batterieloser Zähler (1) nach einem der Ansprüche 1 oder 2, **dadurch gekennzeichnet, dass** das Trennglied (17) und die Impulsdauereinstellung (18) in der Impulswahlschaltung (6) angeordnet sind.

4. Batterieloser Zähler (1) nach einem der Ansprüche 1 bis 3, **dadurch gekennzeichnet, dass** der Ausgangspuls (30, 32) am Ausgang des batterielosen Zählers (1) zur Weiterverarbeitung zur Verfügung steht.

5. Batterieloser Zähler (1) nach einem der Ansprüche 1 bis 4, **dadurch gekennzeichnet, dass** die Impulswahlschaltung (6) von einer externen Stromversorgung versorgt wird.

6. Batterieloser Zähler (1) nach einem der Ansprüche 1 bis 5, **dadurch gekennzeichnet, dass** eine externe Kundenauswerteschaltung mit einer Spannungsquelle (14) die Impulswahlschaltung (6) mit Strom versorgt.

7. Batterieloser Zähler (1) nach einem der Ansprüche 1 bis 6 , **dadurch gekennzeichnet, dass** die Kundenauswertschaltung als Mengenumwerter, Index-oder Flowmeter ausgebildet ist, welche die Ausgangsimpulse (30, 32) welche als rechteckförmige Signale vorliegen, weiter verarbeitet.

8. Batterieloser Zähler (1) nach einem der Ansprüche 1 bis 7, **dadurch gekennzeichnet, dass** der Zähler in einem rohrförmigen Gehäuse untergebracht ist welches in einem Gas- oder Wasserzähler montierbar ist

9. Batterieloser Zähler (1) nach einem der Ansprüche 1 bis 8, **dadurch gekennzeichnet, dass** der Wiegand-Sensor (2) das rotierende Magnetfeld eines Turbinenrades erfasst und in Impulse (31) umgesetzt, die an eine Zählschaltung (4) zugeleitet und in einem FRAM (Ferroelectric Random Access Memory) abgespeichert werden.

10. Batterieloser Zähler (1) nach einem der Ansprüche 1 bis 9, **dadurch gekennzeichnet, dass** das Turbinenrad mit einem oder mehreren Permanentmagneten besetzt ist.

## Claims

1. Battery-less counter (1) for gas or water meters with at least one Wiegand sensor (2) serving as energy-generating element and an evaluation circuit (10) connected thereto for processing a pulse (31), **characterised in that** the battery-less counter feeds the pulses (31) generated and prepared by the Wiegand sensor (2) to a highly insulated separating member (17), and **in that** arranged at the output of this separating member (17) there is a pulse selection circuit (6) with a pulse duration setting element (18) which prepares the pulses (31) counted simultaneously by means of the counting circuit (4) with the pulse selection circuit (6) and converts them into different pulse shapes/pulse frequencies in the form of HF/LF pulses (30, 32) and outputs them to the exterior, whereby a variable assignment of the HF/LF pulses (30, 32) to Wiegand pulses (31) with a selectable pulse conversion ratio is provided.

2. Battery-less counter (1) according to claim 1, **characterised in that** the separating member (17) is embodied in the form of a MOSFET.

3. Battery-less counter (1) according to one of claims 1 or 2, **characterised in that** the separating member (17) and the pulse duration setting element (18) are arranged in the pulse selection circuit (6).

4. Battery-less counter (1) according to one of claims 1 to 3, **characterised in that** the output pulse (30, 32) is available at the output of the battery-less counter (1) for further processing.

5. Battery-less counter (1) according to one of claims 1 to 4, **characterised in that** the pulse selection circuit (6) is supplied from an external power supply.

6. Battery-less counter (1) according to one of claims 1 to 5, **characterised in that** an external customer evaluation circuit with a voltage source (14) supplies the pulse selection circuit (6) with current.

7. Battery-less counter (1) according to one of claims 1 to 6, **characterised in that** the customer evaluation circuit is embodied in the form of a quantity converter, index or flow meter which further processes the output pulses (30, 32) which are present in the form of rectangular signals.

8. Battery-less counter (1) according to one of claims 1 to 7, **characterised in that** the counter is accommodated in a tubular housing which can be mounted in a gas or water meter.

9. Battery-less counter (1) according to one of claims 1 to 8, **characterised in that** the Wiegand sensor (2) detects the rotating magnetic field of a turbine wheel and converts it into pulses (31) which are fed to a counting circuit (4) and stored in a FRAM (ferroelectric random access memory).

10. Battery-less counter (1) according to one of claims 1 to 9, **characterised in that** the turbine wheel carries one or more permanent magnets.

## Revendications

1. Compteur sans batterie (1) pour compteurs de gaz ou d'eau avec au moins un capteur Wiegand (2), comme élément générateur d'énergie, et un circuit d'analyse (10), raccordé audit capteur, pour le traitement d'une impulsion (31), **caractérisé en ce que** le compteur sans batterie transmet les impulsions (31) générées par le capteur Wiegand (2) et traitées à un élément de séparation (17) bien isolé, et **en ce qu'**il est prévu à la sortie de cet élément de séparation (17) un circuit de sélection d'impulsion (6) avec un réglage de durée d'impulsion (18) qui traite avec le circuit de sélection (6) les impulsions (31) comptées simultanément par l'intermédiaire du circuit compteur (4), les convertit en d'autres formes d'impulsion/fréquences d'impulsion en forme d'impulsions HF/LF (30, 32) et les transmet à l'extérieur, une attribution variable des impulsions HF/LF (30, 32) aux impulsions Wiegand (31) étant prévue avec une conversion d'impulsion apte à être sélectionnée.

2. Compteur sans batterie (1) selon la revendication 1, **caractérisé en ce que** l'élément de séparation (17) est conçu comme un MOSFET.

3. Compteur sans batterie (1) selon l'une des revendications 1 ou 2, **caractérisé en ce que** l'élément de séparation (17) et le réglage de durée d'impulsion (18) sont disposés dans le circuit de sélection d'impulsion (6).

4. Compteur sans batterie (1) selon l'une des revendications 1 à 3, **caractérisé en ce que** l'impulsion de sortie (30, 32) à la sortie du compteur sans batterie (1) est disponible pour la poursuite du traitement.

5. Compteur sans batterie (1) selon l'une des revendications 1 à 4, **caractérisé en ce que** le circuit de sélection d'impulsion (6) est alimenté par une alimentation électrique externe.

6. Compteur sans batterie (1) selon l'une des revendications 1 à 5, **caractérisé en ce qu'**un circuit externe d'analyse de clients alimente en électricité le circuit de sélection d'impulsion (6) avec une source de tension (14).

7. Compteur sans batterie (1) selon l'une des revendications 1 à 6, **caractérisé en ce que** le circuit d'analyse de clients est conçu comme un convertisseur de volume, un indicateur d'index ou un débitmètre qui poursuit le traitement des impulsions de sortie (30, 32) présentes sous la forme de signaux rectangulaires.

8. Compteur sans batterie (1) selon l'une des revendications 1 à 7, **caractérisé en ce que** le compteur est logé dans un boîtier tubulaire qui est apte à être monté dans un compteur de gaz ou d'eau.

9. Compteur sans batterie (1) selon l'une des revendications 1 à 8, **caractérisé en ce que** le capteur Wiegand (2) relève le champ magnétique tournant d'une roue de turbine et le convertit en impulsions (31), qui sont transmises à un circuit de compteur (4) et sont stockées dans une FRAM (Mémoire vive ferroélectrique).

10. Compteur sans batterie (1) selon l'une des revendications 1 à 9, **caractérisé en ce que** la roue de turbine est garnie d'un ou plusieurs aimants permanents.
